# EUROPEAN PATENT APPLICATION

(11) **EP 4 852 110 A1**
(43) Date of publication of application: **09.12.2026**
(21) Application number: 25768257.5
(22) Date of filing: 06.03.2025
(51) Int. Cl.: H01M 8/1053, C25B 13/08, H01B 1/06, H01B 13/00, H01M 8/10, H01M 8/1067, H01M 8/1069, H01M 8/1072, H01M 8/1081

(54) **ELECTROLYTE MEMBRANE PRODUCTION METHOD AND ELECTROLYTE MEMBRANE**

(30) Priority: 08.03.2024 JP 2024036172
(71) Applicant: Tosoh Corporation, Shunan-shi, Yamaguchi 746-8501 (JP)
(72) Inventor: MIYAZAWA, Atsushi, Ayase-shi, Kanagawa 252-1123 (JP); YOSHINAGA, Shohei, Ayase-shi, Kanagawa 252-1123 (JP); IWASHIMA, Toshiki, Ayase-shi, Kanagawa 252-1123 (JP)
(74) Representative: TBK
(86) International application number: PCT/JP2025/008120
(87) International publication number: WO 2025/187762

(57) **Abstract**

A method for producing an electrolyte membrane including a step of providing a porous substrate including a porous membrane and a crosslinking agent retained in pores of the porous membrane; an impregnation step of impregnating the porous substrate with a solution containing an electrolyte polymer; and a crosslinking step of reacting the electrolyte polymer with the crosslinking agent to form a crosslinked electrolyte polymer.

## Description

### Technical Field

The present disclosure relates to a method for producing an electrolyte membrane and to an electrolyte membrane.

### Background Art

Fuel cells are attracting attention because they represent a new energy technology that can provide high energy efficiency. In particular, polymer electrolyte fuel cells, which use an electrolyte polymer, are particularly attracting attention because their high maximum current density and low operating temperature make them suitable as a mobile power source for vehicles and the like and as a low-capacity power source for portable electronic devices and the like.

The electrolyte membrane used as the electrolyte for polymer electrolyte fuel cells may repeatedly experience swelling due to wetting and shrinkage due to drying, and, consequently, cracks may develop on a surface or in an interior of the membrane. Accordingly, studies are being conducted on electrolyte membranes that are reinforced by incorporating a porous substrate in an interior of the membrane to improve mechanical strength.

Patent Literature 1, for example, discloses an electrolyte membrane including a porous substrate and a resin composition, the resin composition being loaded in voids and/or pores of the porous substrate and being immobilized and retained therein; the resin composition includes an electrolyte polymer crosslinked by a crosslinking agent.

### Citation List

### Patent Literature

Patent Literature 1: Japanese Unexamined Patent Publication No. 2008-117750

### Summary of Invention

### Technical Problem

The electrolyte membrane described in Patent Literature 1 is prepared by impregnating the porous substrate with the resin composition, in which the crosslinking agent has been mixed with the electrolyte polymer in advance. However, resin compositions in which a crosslinking agent has been mixed with an electrolyte polymer in advance tend to increase in viscosity because of their short pot life (the amount of time the mixture is usable). Consequently, such resin compositions does not easily penetrate into an interior of a porous substrate, and as a result, sufficient improvement in the mechanical strength of an electrolyte membrane may not be achieved.

An object of the present disclosure is to provide at least one of an electrolyte membrane having high mechanical strength and a method for producing such an electrolyte membrane.

### Solution to Problem

The present disclosure is as set forth in the claims, and a summary of the present disclosure is as follows.
[1] A method for producing an electrolyte membrane including:
   a step of providing a porous substrate including a porous membrane and a crosslinking agent retained in pores of the porous membrane;
   an impregnation step of impregnating the porous substrate with a solution containing an electrolyte polymer; and
   a crosslinking step of reacting the electrolyte polymer with the crosslinking agent to form a crosslinked electrolyte polymer.
[2] The method for producing the electrolyte membrane according to [1], further including:
   a drying step of drying the solution loaded into the porous substrate in the impregnation step;
   a step of coating the solution containing the electrolyte polymer onto a surface of the porous substrate subjected to the drying step to form a layer made from the solution on the surface of the porous substrate; and
   a step of forming a contact layer containing the electrolyte polymer by drying the layer made from the solution.
[3] The method for producing the electrolyte membrane according to [2], wherein the contact layer has a thickness of 1 µm or greater and 15 µm or less.
[4] The method for producing the electrolyte membrane according to any one of [1] to [3], wherein the electrolyte polymer has a number average molecular weight of 18000 or greater and 60000 or less.
[5] The method for producing the electrolyte membrane according to any one of [1] to [4], wherein an amount of the crosslinking agent retained in the porous substrate is 3.0 × 10⁻⁸ mol/cm² or greater and 20.0 × 10⁻⁸ mol/cm² or less.
[6] The method for producing the electrolyte membrane according to any one of [1] to [5], wherein the porous substrate further includes, in the pores, a binding agent that is not reactive with the crosslinking agent.
[7] The method for producing the electrolyte membrane according to [6], wherein the binding agent is a polymer having a molecular structure identical to a molecular structure of a backbone of the electrolyte polymer.
[8] An electrolyte membrane including a structure in which a reinforcement layer is disposed between contact layers, wherein
   the reinforcement layer includes a porous membrane and a crosslinked electrolyte polymer that is present in pores of the porous membrane and is at least partially crosslinked, and
   the contact layers include an uncrosslinked electrolyte polymer.
[9] The electrolyte membrane according to [8], wherein
   the crosslinked electrolyte polymer is a reaction product of an electrolyte polymer and a crosslinking agent, and
   moieties derived from the crosslinking agent in the crosslinked electrolyte polymer are present in a higher amount in a vicinity of a wall surface within the pores than in a central region within the pores in the porous membrane.
[10] The electrolyte membrane according to [8] or [9], wherein the crosslinked electrolyte polymer has a number average molecular weight of 50000 or greater and 300000 or less.
[11] The electrolyte membrane according to any one of [8] to [10], wherein the uncrosslinked electrolyte polymer has a number average molecular weight of 18000 or greater and 60000 or less.
[12] The electrolyte membrane according to any one of [8] to [11], wherein the contact layers have a thickness of 1 µm or greater and 15 µm or less.
[13] The electrolyte membrane according to any one of [8] to [12], wherein the reinforcement layer includes, in the pores of the porous membrane, a binding agent that is not reactive with the crosslinking agent.
[14] The electrolyte membrane according to [13], wherein the binding agent is a polymer having a molecular structure identical to a molecular structure of a backbone of the electrolyte polymer.
[15] The electrolyte membrane according to any one of [8] to [14], wherein the electrolyte membrane is an electrolyte membrane for fuel cells or an electrolyte membrane for water electrolysis.

### Advantageous Effects of Invention

The present disclosure can provide at least one of an electrolyte membrane having high mechanical strength and a method for producing such an electrolyte membrane.

### Brief Description of Drawings

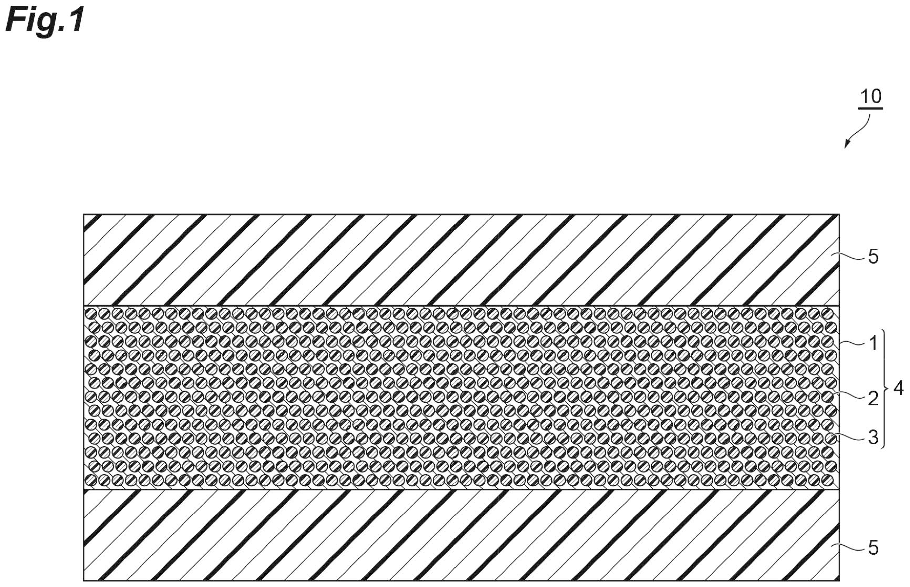

[Fig. 1] Fig. 1 is a schematic diagram illustrating a cross section of an electrolyte membrane according to one embodiment of the present disclosure.

### Description of Embodiments

Examples of embodiments of the present disclosure will be described below with reference to the drawings as appropriate. Note that the present disclosure is not limited to the embodiments described below. Any combination of the features and parameters disclosed in this specification is encompassed by the present disclosure. In addition, ranges defined by any combination of any of the upper limits and lower limits of the numerical values disclosed in this specification are also encompassed by the present disclosure. The expression "A or B" means one of A and B and also means both A and B. Furthermore, the materials mentioned below as examples may be used alone or in a combination of two or more unless otherwise specified. Furthermore, the term "layer" or "membrane" encompasses not only structures with a shape in which the layer or membrane is formed on the entire area but also structures with a shape in which the layer or membrane is formed on a portion of the area, as viewed in a plan view. Furthermore, the term "step" encompasses not only independent steps but also steps that cannot be clearly distinguished from other steps, provided that the desired effect of the step is achieved.

### <Electrolyte Membrane>

Fig. 1 is a schematic diagram illustrating a cross section of an electrolyte membrane according to one embodiment. An electrolyte membrane 10, illustrated in Fig. 1, is an electrolyte membrane having a structure in which a reinforcement layer 4 is disposed between contact layers 5; the reinforcement layer 4 includes a porous membrane 1 and a crosslinked electrolyte polymer 3, which is present in pores 2 of the porous membrane 1 and is at least partially crosslinked; and the contact layers 5 include an uncrosslinked electrolyte polymer. The electrolyte membrane 10 of the present embodiment may have a structure in which one of the contact layers 5, the reinforcement layer 4, and the other of the contact layers 5 are stacked in this order and are integrated together (i.e., a structure in which the reinforcement layer 4 is held by the two contact layers 5). While the two contact layers are denoted by the same numeral (5) in Fig. 1, the two contact layers may be identical to or different from each other. Details of the contact layers 5 provided in the description below apply to both of the two contact layers.

### (Reinforcement Layer)

### [Porous Membrane]

The porous membrane 1 has pores 2. At least some of the pores 2 of the porous membrane 1 may be continuous at least in a thickness direction.

The porous membrane 1 may be any porous membrane that can be used as a reinforcing membrane for fuel cells. For example, the porous membrane 1 may be a membrane formed of a hydrocarbon polymer, such as polyethylene, or a fluoropolymer, such as expanded polytetrafluoroethylene (PTFE). The porous membrane (e.g., a porous membrane formed of a hydrocarbon polymer, as mentioned above) may be one or more sheets selected from the group consisting of nonwoven fabrics, woven fabrics, and porous materials (e.g., sponge).

The pores 2 in the porous membrane 1 may have an average pore size of 0.1 nm or greater, 1 nm or greater, or 5 nm or greater, and 200 nm or less, 175 nm or less, or 150 nm or less. The average pore size of the pores 2 in the porous membrane 1 may be 0.1 nm or greater and 200 nm or less, 1 nm or greater and 175 nm or less, or 5 nm or greater and 150 nm or less.

The porous membrane 1 may have a porosity of 50% or greater, 60% or greater, or 70% or greater, from the viewpoint of easily increasing the amount of the crosslinked electrolyte polymer loaded. The porosity of the porous membrane 1 may be 98% or less or 95% or less, from the viewpoint of easily maintaining the strength of the porous membrane 1 itself. From the above viewpoints, the porosity of the porous membrane 1 may be 50% or greater and 98% or less, 60% or greater and 98% or less, or 70% or greater and 95% or less.

The porous membrane 1 may have a thickness of 1 µm or greater, 2 µm or greater, or 5 µm or greater, and 50 µm or less, 30 µm or less, or 20 µm or less, from the viewpoint of further enhancing mechanical strength and swelling resistance of the electrolyte membrane without impairing the properties as an electrolyte membrane. The thickness of the porous membrane 1 may be 1 µm or greater and 50 µm or less, 2 µm or greater and 30 µm or less, or 5 µm or greater and 20 µm or less.

### [Crosslinked Electrolyte Polymer]

The crosslinked electrolyte polymer 3 is an electrolyte polymer that is at least partially crosslinked, and has a crosslinked structure in the molecule. The crosslinked electrolyte polymer 3 may be a reaction product of an electrolyte polymer and a crosslinking agent. That is, the crosslinked electrolyte polymer 3 may be an electrolyte polymer having polymer units derived from the electrolyte polymer and moieties (crosslinking groups) derived from the crosslinking agent that combine with two or more of the polymer units. In this electrolyte polymer, the moieties derived from the crosslinking agent in the crosslinked electrolyte polymer 3 may be present in a higher amount in the vicinity of a wall surface within the pores 2 than in a central region within the pores 2 in the porous membrane 1.

The electrolyte polymer may be, for example, a hydrocarbon-based or fluorine-based resin having ion-exchange groups. The electrolyte polymer may be an electrolyte polymer that has not been crosslinked (uncrosslinked).

The electrolyte polymer may include an electrolyte polymer having a hydrophilic segment and a hydrophobic segment, and from the viewpoint that mechanical strength can be further increased, may include one or more electrolyte polymers selected from the group consisting of electrolyte polymers having any of the structures represented by formulae (P1) to (P5) below. 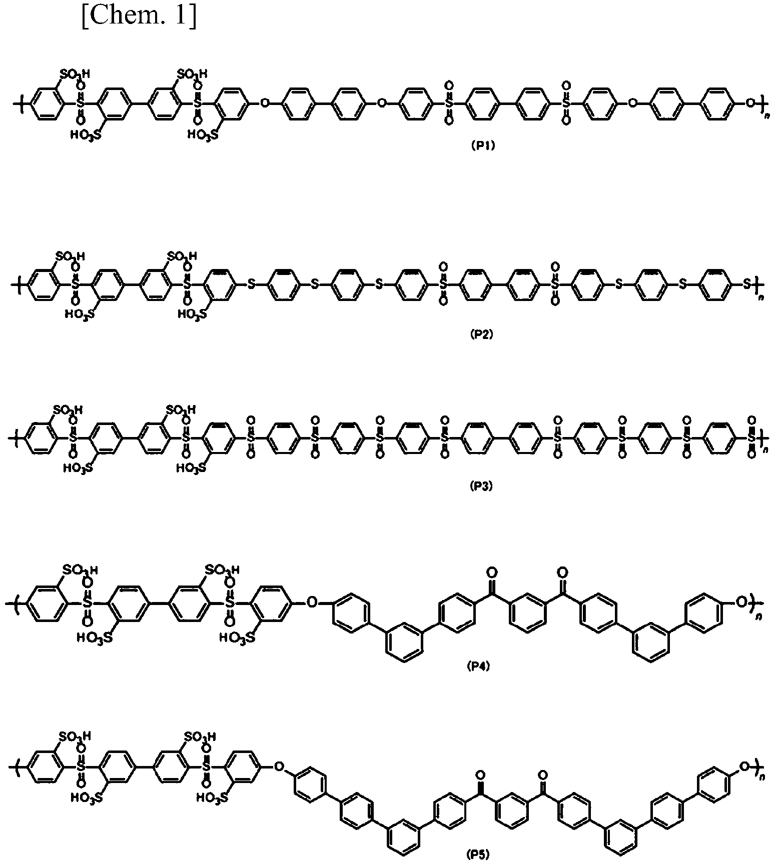 [In formulae (P1) to (P5), n represents the number of repetitions.]

The electrolyte polymer may have a number average molecular weight of 18000 or greater and 60000 or less, 30000 or greater and 55000 or less, or 40000 or greater and 50000 or less. The number average molecular weights disclosed in the present disclosure are values measured by gel permeation chromatography (GPC) and calibrated with standard polyethylene glycol/polyethylene oxide (PEG/PEO).

The polymer units derived from the electrolyte polymer may be identical to or different from one another.

The crosslinking agent may be a crosslinkable compound known in the art. The crosslinking agent may include a crosslinkable compound having one or more aromatic rings or may include a crosslinkable compound having one or two aromatic rings, from the viewpoint of chemical stability. In the case where the crosslinking agent has one or more aromatic rings, the polymer units derived from the electrolyte polymer may be directly bonded to the one or more aromatic rings in the crosslinking groups or may be bonded thereto via -O-, -S-, or -SO₂-.

The crosslinkable compound having one or two aromatic rings may include one or more compounds selected from the group consisting of decafluorobiphenyl, 4,4'-dicyano-3,3',5,5'-tetrafluorobiphenyl, 3,3',5,5'-tetrachloro-4,4'-dicyanobiphenyl, and pentachlorobenzonitrile. Among these, decafluorobiphenyl has good reactivity with the electrolyte polymer having any of the structures represented by formulae (P1) to (P5).

In the case where there is a plurality of the moieties (crosslinking groups) derived from the crosslinking agent, they may be identical to or different from one another.

The number average molecular weight (Mn) of the crosslinked electrolyte polymer 3 may be 50000 or greater and 300000 or less, depending on the molecular structure. When the number average molecular weight of the crosslinked electrolyte polymer 3 is within this range, the mechanical strength tends to be further increased, and the swelling of the electrolyte membrane due to wetting tends to be suppressed. From the same viewpoints, the number average molecular weight of the crosslinked electrolyte polymer 3 may be 60000 or greater and 250000 or less, 70000 or greater and 250000 or less, 70000 or greater and 200000 or less, 80000 or greater and 150000 or less, or 90000 or greater and 100000 or less.

### [Others]

The reinforcement layer 4 may further include, in the pores 2 of the porous membrane 1, a binding agent that is not reactive with the crosslinking agent. The binding agent is not particularly limited as long as it is a resin that is not reactive with the crosslinking agent. The binding agent may be a polymer having a molecular structure identical to that of a backbone of the electrolyte polymer (e.g., a polymer in which a backbone structure of the polymer molecule is identical to that of the electrolyte polymer). Examples of such polymers include polymers with a structure similar to that of the electrolyte polymer, except that no ion-exchange group is present, and polymers similar to the electrolyte polymer, except that a metal is bonded to the ion-exchange group to form a salt.

The binding agent may be one or more polymers selected from the group consisting of polymers having any of the structures represented by formulae (P6) to (P10) below. 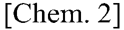 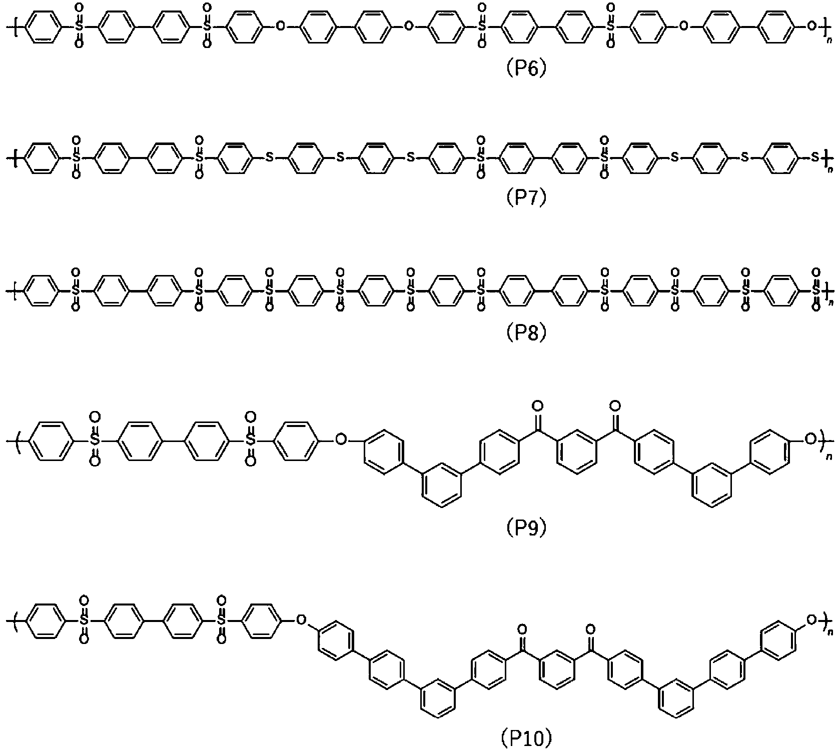 [In formulae (P6) to (P10), n represents the number of repetitions.]

The reinforcement layer 4 may further include, in the pores 2 of the porous membrane 1, an additive that promotes the reaction between the electrolyte polymer and the crosslinking agent. The additive may be an additive known in the art that is used for the aforementioned purpose. For example, the additive may be one or more selected from cesium carbonate and potassium carbonate or may be a different basic salt.

The reinforcement layer 4 may include an uncrosslinked electrolyte polymer, an unreacted crosslinking agent, one or more other additives, unavoidable impurities, and the like. Examples of the one or more other additives include water-retaining inorganic materials and radical scavengers, and specific examples thereof include water, silica, cerium oxide, and manganese oxide. These components may be present in the pores 2 of the porous membrane 1 or may be retained in the pores 2 of the porous membrane 1.

The reinforcement layer 4 may have a thickness approximately equal to the thickness of the porous membrane 1. The thickness of the reinforcement layer 4 may be 1 µm or greater and 50 µm or less, 2 µm or greater and 30 µm or less, or 5 µm or greater and 20 µm or less.

### (Contact Layer)

Since the contact layers 5 include an uncrosslinked electrolyte polymer, the contact layers 5 have suitable flexibility and are easily deformable. As a result, the contact layers 5 can accommodate surface irregularities of an electrode catalyst layer and adhere to catalyst particles; consequently, proton conduction paths tend to be expanded.

### [Uncrosslinked Electrolyte Polymer]

Examples of the uncrosslinked electrolyte polymer are the same as the examples of the electrolyte polymer described above in "(Reinforcement Layer)". The uncrosslinked electrolyte polymer present in the contact layers 5 may be identical to or different from the electrolyte polymer that is the raw material for the crosslinked electrolyte polymer described above in "(Reinforcement Layer)". One uncrosslinked electrolyte polymer may be used alone, or two or more uncrosslinked electrolyte polymers may be used in combination. The uncrosslinked electrolyte polymers present in the respective contact layers 5 may be identical or different.

In general, uncrosslinked electrolyte polymers have a lower number average molecular weight than crosslinked electrolyte polymers (e.g., the crosslinked electrolyte polymer present in the reinforcement layer). The number average molecular weight of the uncrosslinked electrolyte polymer may be 18000 or greater and 60000 or less, depending on the molecular structure. When the number average molecular weight of the uncrosslinked electrolyte polymer is within this range, the swelling of the contact layers 5 is suppressed, which can prevent a decrease in the mechanical strength of the electrolyte membrane 10, and in addition, the flexibility of the contact layers 5 is increased, which can enhance the above-described effect of expanding proton conduction paths. From the same viewpoints, the number average molecular weight of the uncrosslinked electrolyte polymer may be 30000 or greater and 55000 or less or 40000 or greater and 50000 or less.

The contact layers 5 may be layers consisting essentially of an electrolyte polymer. The electrolyte polymer may be formed of only an uncrosslinked electrolyte polymer and need not include the crosslinked electrolyte polymer 3. The contact layers 5 may be layers consisting of only an electrolyte polymer. The contact layers 5 may include one or more other additives, unavoidable impurities, and the like. Examples of the one or more other additives are the same as the examples of the one or more other additives in the reinforcement layer 4.

The contact layers 5 may include a layer including the crosslinked electrolyte polymer 3 and a layer that does not include the crosslinked electrolyte polymer 3. For example, the crosslinked electrolyte polymer 3, described above, may be present in such a manner that it covers at least a portion of a surface of the porous membrane 1 to constitute a portion (a layer including the crosslinked electrolyte polymer) of the contact layers 5.

The contact layers 5 may have a thickness of 1 µm or greater and 15 µm or less. When the thickness of the contact layers 5 is 1 µm or greater, the exposure of the porous membrane 1 to the surface of the electrolyte membrane 10 can be prevented, and the above-described effect of expanding proton conduction paths can be enhanced. Furthermore, when the thickness of the contact layers 5 is 15 µm or less, the swelling of the contact layers 5 is suppressed, which can prevent a decrease in the mechanical strength of the electrolyte membrane 10. From the same viewpoints, the thickness of the contact layers 5 may be 1 µm or greater and 10 µm or less. In the case where the contact layers 5 include a layer including the crosslinked electrolyte polymer 3, the layer not including the crosslinked electrolyte polymer 3 may have a thickness of, for example, 1 µm or greater and 10 µm or less. The thicknesses of the respective contact layers 5 may be the same or different. From the same viewpoints as described above, the total thickness of the contact layers 5 (the sum of the thicknesses of the respective contact layers 5) may be 2 µm or greater and 30 µm or less or 2 µm or greater and 20 µm or less.

In one embodiment, the electrolyte polymer in the contact layers 5 may have a number average molecular weight of 18000 or greater and 60000 or less, and the contact layers 5 may have a thickness of 1 µm or greater and 10 µm or less. When the number average molecular weight of the electrolyte polymer is 18000 or greater, and the thickness of the contact layers 5 is 10 µm or less, the swelling of the contact layers 5 is further suppressed, and, consequently, the mechanical strength of the electrolyte membrane 10 tends to be further increased. Furthermore, when the thickness of the contact layers 5 is 1 µm or greater, the exposure of the porous membrane 1 to the surface of the electrolyte membrane 10 can be prevented, and when the electrolyte polymer in the contact layers 5 is 60000 or less, the above-described effect of expanding proton conduction paths can be further enhanced.

The electrolyte membrane 10 may have a thickness of, for example, 3 to 70 µm.

The electrolyte membrane 10 of the present embodiment may be used as, for example, an electrolyte membrane for fuel cells, such as polymer electrolyte fuel cells, or an electrolyte membrane for water electrolysis.

### <Method for Producing Electrolyte Membrane>

According to one embodiment, a method for producing an electrolyte membrane includes a step of providing a porous substrate including a porous membrane and a crosslinking agent retained in pores of the porous membrane (hereinafter, this step is also referred to as a "providing step"); an impregnation step of impregnating the porous substrate with a solution containing an electrolyte polymer; and a crosslinking step of reacting the electrolyte polymer with the crosslinking agent to form a crosslinked electrolyte polymer.

With this method, it is not necessary to add the crosslinking agent to the solution containing an electrolyte polymer, during the impregnation step, and as a result, a crosslinked electrolyte polymer can be loaded into the pores of the porous substrate (porous membrane) without causing an increase in viscosity due to the reaction between the electrolyte polymer and the crosslinking agent. In addition, unlike in the related art, it is not necessary to limit the amount of crosslinking agent to address the increase in viscosity, and, therefore, a crosslink density of the crosslinked electrolyte polymer can be increased. Accordingly, the method described above enables the production of an electrolyte membrane having high mechanical strength. In addition, for reasons similar to the above, the method tends to enable the production of an electrolyte membrane that exhibits excellent swelling resistance. Accordingly, it is not necessary to add an additional resin for suppressing swelling, and, consequently, it is possible to inhibit a decrease in the mechanical strength of the electrolyte membrane attributable to a swelling suppression means. Furthermore, the method also enables the production of the electrolyte membrane 10 of the embodiment described above, by, for example, performing a solution layer forming step and a contact layer forming step, which will be described below. That is, the method for producing an electrolyte membrane according to the embodiment can be a method for producing the electrolyte membrane 10 according to the embodiment described above.

### (Providing Step)

The providing step may be a step of providing a porous substrate that has been prepared in advance or a step of preparing a porous substrate. In the latter case, the providing step may include a step of causing a crosslinking agent to be retained in the pores of the porous membrane. Examples of the porous membrane and the crosslinking agent are the same as the examples of the porous membrane and the crosslinking agent described above in "(Reinforcement Layer)".

Methods for causing a crosslinking agent to be retained in the pores of the porous membrane include a method in which the porous membrane is impregnated with a solution containing a crosslinking agent and an organic solvent (hereinafter, this solution is also referred to as a "crosslinking agent solution") and is subsequently dried. That is, the providing step may include a process for impregnating the porous membrane with the crosslinking agent solution and a process for drying the porous membrane impregnated with the crosslinking agent solution. The impregnation of the porous membrane with the crosslinking agent solution allows the crosslinking agent to adhere to the interior of the pores of the porous membrane, and the drying of the impregnated porous membrane allows the crosslinking agent to be immobilized on the porous membrane. Examples of methods for impregnating the porous membrane with the crosslinking agent solution include a method in which the crosslinking agent solution is dropped onto the porous membrane, a method in which the crosslinking agent solution is coated onto the porous membrane, and a method in which the porous membrane is immersed in the crosslinking agent solution.

The amount of the crosslinking agent retained in the porous substrate may be 3.0 × 10⁻⁸ mol/cm² or greater and 20.0 × 10⁻⁸ mol/cm² or less, depending on the types of the crosslinking agent and the electrolyte polymer. When the amount of the crosslinking agent retained in the porous substrate is 3.0 × 10⁻⁸ mol/cm² or greater, the crosslink density of the crosslinked electrolyte polymer in the reinforcement layer is increased, and, consequently, the mechanical strength of the electrolyte membrane tends to be further increased. When the amount of the crosslinking agent retained in the porous substrate is 20.0 × 10⁻⁸ mol/cm² or less, the effect of improving the mechanical strength by crosslinking can be readily achieved. From these viewpoints, the amount of the crosslinking agent retained in the porous substrate may be 5.0 × 10⁻⁸ mol/cm² or greater or 10.0 × 10⁻⁸ mol/cm² or greater and may be 18.0 × 10⁻⁸ mol/cm² or less or 15.0 × 10⁻⁸ mol/cm² or less, and the amount may be 5.0 × 10⁻⁸ mol/cm² or greater and 18.0 × 10⁻⁸ mol/cm² or less or 10.0 × 10⁻⁸ mol/cm² or greater and 15.0 × 10⁻⁸ mol/cm² or less. The amount of the crosslinking agent retained in the porous substrate is the amount of the crosslinking agent immobilized per unit surface area of the porous substrate and can be determined by dividing the total amount (unit: mol) of the crosslinking agent by the surface area (unit: cm²) of the porous membrane. The concentration of the crosslinking agent in the crosslinking agent solution may be appropriately adjusted so that the amount of the crosslinking agent retained in the porous substrate can fall within any of the above-mentioned ranges.

The crosslinking agent may be directly adhered to a fiber or the like that forms the porous membrane, by van der Waals forces or the like. The crosslinking agent may be immobilized on the porous membrane via a binding agent that is not reactive with the crosslinking agent. That is, the porous substrate may further include, in the pores, a binding agent that is not reactive with the crosslinking agent, from the viewpoint of making it easier to retain the crosslinking agent. In the case where a binding agent is used, the binding agent may be contained in the crosslinking agent solution.

Examples of the binding agent are the same as the examples of the binding agent described above in "(Reinforcement Layer)". In particular, the binding agent may be a polymer having a molecular structure identical to a molecular structure of a backbone of the electrolyte polymer; the binding agent may be one or more polymers selected from the group consisting of polymers having any of the structures represented by formulae (P6) to (P10) above. In the case where a polymer having a molecular structure identical to that of the backbone of the electrolyte polymer is used as the binding agent, affinity between the porous substrate and the electrolyte polymer is improved, which facilitates the loading of the electrolyte polymer into the pores of the porous substrate. In addition, since a polymer having a molecular structure identical to that of the backbone of the electrolyte polymer is used, it is not necessary to provide a resin different from the electrolyte polymer, and, therefore, the cost of producing the electrolyte membrane can be reduced.

The providing step may further include a step of causing an additive that promotes the reaction between the electrolyte polymer and the crosslinking agent to be retained in the pores of the porous membrane. Examples of the additive are the same as the examples of the additive described above in "(Reinforcement Layer)".

Methods for causing the additive to be retained in the pores of the porous membrane include a method in which the additive is included in the crosslinking agent solution and a method in which, after the porous membrane is impregnated with an aqueous solution containing the additive by coating or the like, the porous membrane is dried. In the case where the latter method is employed, the step of causing the additive to be retained in the pores of the porous membrane may be performed before or after the step of causing the crosslinking agent to be retained in the pores of the porous membrane.

### (Impregnation Step)

The impregnation step impregnates the porous substrate with a solution containing the electrolyte polymer, thereby loading the solution containing the electrolyte polymer into the pores of the porous substrate. Examples of methods that may be used to impregnate the porous substrate with a solution containing the electrolyte polymer include solution casting methods, such as cast coating.

Examples of the electrolyte polymer are the same as the examples of the electrolyte polymer described above in "(Reinforcement Layer)". The electrolyte polymer may have a number average molecular weight within the same range as that described above. When the number average molecular weight of the electrolyte polymer is 18000 or greater, the mechanical strength of the electrolyte membrane tends to be further increased. When the number average molecular weight of the electrolyte polymer is 60000 or less, an excessive increase in the viscosity of the solution containing the electrolyte polymer can be prevented, and, consequently, it becomes easy to achieve the effects of facilitating the loading of the solution containing the electrolyte polymer into the pores of the porous substrate and facilitating the deposition of the contact layers on the porous substrate. One electrolyte polymer may be used alone, or two or more electrolyte polymers may be used in combination.

The solvent used in the solution containing the electrolyte polymer is not particularly limited provided that the solvent can dissolve the electrolyte polymer. The solvent may be any organic solvent, which may be, for example, one or more selected from the group consisting of N-methylpyrrolidone, N,N-dimethylacetamide, N,N-dimethylformamide, dimethyl sulfoxide, diphenyl sulfone, sulfolane, 1,3-dimethyl-2-imidazolidinone, and tetramethylurea. One of these solvents may be used alone, or two or more of these may be used in combination.

The content of the electrolyte polymer in the solution containing the electrolyte polymer is, for example, 1 mass% or greater, 3 mass% or greater, or 5 mass% or greater, and 30 mass% or less, 20 mass% or less, or 15 mass% or less, and may be 1 mass% or greater and 30 mass% or less, 3 mass% or greater and 20 mass% or less, or 5 mass% or greater and 15 mass% or less, based on a total mass of the solution.

The solution containing the electrolyte polymer may contain components other than the electrolyte polymer and the solvent, but from the viewpoint that the effects of the present disclosure can be easily achieved, the content of the crosslinking agent may be 0.01 parts by mass or less or 0 parts by mass per 100 parts by mass of the electrolyte polymer.

### (Crosslinking Step)

The crosslinking step reacts the crosslinking agent, which is retained in the pores of the porous substrate, with the electrolyte polymer loaded in the pores to crosslink the electrolyte polymer. This reaction forms, in the pores of the porous substrate, a crosslinked electrolyte polymer that is at least partially crosslinked. The thus-formed crosslinked electrolyte polymer is a reaction product of the electrolyte polymer and the crosslinking agent and has polymer units derived from the electrolyte polymer and moieties (crosslinking groups) derived from the crosslinking agent that combine with two or more of the polymer units. Since the moieties derived from the crosslinking agent in the crosslinked electrolyte polymer are moieties derived from the crosslinking agent retained in the pores of the porous substrate, the moieties are likely to be present in a higher amount in the vicinity of a wall surface within the pores than in a central region within the pores in the porous membrane.

Regarding the reaction between the electrolyte polymer and the crosslinking agent in the crosslinking step, the reaction can be advanced by heating the porous substrate loaded with the electrolyte polymer, depending on the combination of the electrolyte polymer and the crosslinking agent. Regarding the temperature (heating temperature) for heating the porous substrate loaded with the electrolyte polymer, in a case where the porous substrate has a melting point, the heating temperature may be less than or equal to the melting point of the porous substrate, depending on the type of the porous substrate, so that the electrolyte polymer can be crosslinked while deformation and degradation of the porous substrate are prevented.

The heating temperature may be, for example, 40 to 80°C, from the viewpoint that the solvent derived from the solution containing the electrolyte polymer can be evaporated to dry the electrolyte membrane and that deformation and degradation of the porous substrate can be prevented. The time (heating time) during which the porous substrate loaded with the electrolyte polymer is heated may be, for example, 1 to 24 hours.

The method described above can produce an electrolyte membrane including a reinforcement layer that includes a porous membrane and a crosslinked electrolyte polymer that is present in the pores of the porous membrane and at least partially crosslinked.

The method for producing an electrolyte membrane according to the embodiment may include a drying step of drying the solution containing the electrolyte polymer loaded into the porous substrate in the impregnation step. Note that the drying step is not required because the drying can be carried out in the crosslinking step, as stated above.

The drying step may be a step of removing at least a portion of the solvent of the solution and may be, for example, a step of drying the solution until the surface of the porous substrate is dry to the touch.

After the drying step, the crosslinking step may be performed directly, or the impregnation step may be performed again. That is, the method for producing an electrolyte membrane according to the embodiment may include a first impregnation step and a second impregnation step. In this case, the first impregnation step may be a step of impregnating the solution containing the electrolyte polymer into the pores of the porous substrate from one side of the porous substrate, and the second impregnation step may be a step of impregnating the solution containing the electrolyte polymer into the pores of the porous substrate from another side (side opposite to the side of the first impregnation step) of the porous substrate. The second impregnation step may be a solution layer forming step, which will be described below.

In a case where it is desired to use electrolyte polymers having different molecular structures for the reinforcement layer and the contact layers, and in a case where, even if the same electrolyte polymer is used for the reinforcement layer and the contact layers, it is desired to prevent the solvent from remaining in the reinforcement layer, it is beneficial to perform the impregnation step in two stages as described above (e.g., the solution containing the electrolyte polymer is loaded into the pores of the porous substrate and then dried, and subsequently, the solution containing the electrolyte polymer is further coated onto the surface of the porous substrate).

The method for producing an electrolyte membrane according to the embodiment may include a step of coating the solution containing the electrolyte polymer onto a surface of the porous substrate (e.g., one surface, both surfaces, or all surfaces of the porous substrate) to form a layer (solution layer) made from the solution on the surface of the porous substrate (hereinafter, this step is also referred to as a "solution layer forming step"); and a step of forming a contact layer containing the electrolyte polymer by drying the solution layer (hereinafter, this step is also referred to as a "contact layer forming step"). These steps may be performed multiple times to form more than one contact layer.

By performing the solution layer forming step and the contact layer forming step, it is possible to form, on the reinforcement layer, a contact layer containing an uncrosslinked electrolyte polymer, and, therefore, for example, it is possible to obtain the electrolyte membrane 10 of the embodiment described above.

The solution layer forming step may be performed after the drying step. That is, the porous substrate onto which the solution containing the electrolyte polymer is to be coated may be a porous substrate subjected to the drying step (porous substrate loaded with the electrolyte polymer).

The solution layer forming step may be a step overlapping the impregnation step described above. For example, by coating the solution containing the electrolyte polymer onto the surface of the porous substrate, the impregnation of the solution containing the electrolyte polymer into the porous substrate can be carried out while the formation of the solution layer on the surface of the porous substrate can also be carried out.

In the solution layer forming step, after the solution containing the electrolyte polymer is coated, a thickness of the layer made from the solution containing the electrolyte polymer may be adjusted to a desired thickness. For example, a gap may be adjusted to have a thickness equal to a desired thickness of the electrolyte membrane (i.e., the sum of the thickness of the porous substrate and a desired thickness of the contact layer), and the porous substrate impregnated with the solution containing the electrolyte polymer may be passed through the gap to adjust the thickness of the solution layer.

The contact layer forming step may be a step overlapping the drying step described above or a step overlapping the crosslinking step. For example, after the solution layer forming step, by performing the drying step or the heat treatment included in the crosslinking step, the drying of the solution layer can be carried out while the formation of the contact layer containing the electrolyte polymer can also be carried out.

In the method for producing an electrolyte membrane according to the embodiment, the reinforcement layer and the contact layers may be prepared simultaneously, or, after the reinforcement layer has been formed, the contact layers may be formed on the reinforcement layer to prepare the electrolyte membrane. Alternatively, the reinforcement layer and the contact layers may be prepared separately, and the contact layers may be laminated onto both surfaces of the reinforcement layer to prepare the electrolyte membrane. In the case where the reinforcement layer and the contact layers are prepared simultaneously, the number of production steps required to produce the electrolyte membrane can be reduced, and in addition, since interfaces are not formed between the reinforcement layer and the contact layers, the resulting electrolyte membrane is one in which the reinforcement layer is continuous with the contact layers.

In the case where the reinforcement layer and the contact layers are prepared simultaneously, the electrolyte membrane may be prepared, for example, as follows: as stated above, the porous substrate subjected to the solution layer forming step (porous substrate impregnated with the solution containing the electrolyte polymer) is passed through a gap adjusted to have a thickness equal to the desired thickness of the electrolyte membrane, to adjust the thickness of the solution layer, and then, the porous substrate is heated to carry out the formation of the crosslinked electrolyte polymer and the drying of the solution in parallel.

### EXAMPLES

The present disclosure will be described in detail below with reference to Examples. Note that the present disclosure is not limited to the Examples.

### <Preparation of Electrolyte Polymer>

### (Synthesis of Hydrophilic Monomer (M1))

A 10-L flask equipped with a dropping funnel, a reflux condenser, and a mechanical stirrer was purged with nitrogen, and 101 g of 4,4'-bis[(4-chlorophenyl)sulfonyl]-1,1'-biphenyl and 4 L of anhydrous tetrahydrofuran were added to the flask; then, stirring was initiated. The resulting mixture was cooled to -70°C in a methanol-dry ice bath, and then, 320 mL of a solution of 2.6 mol/L n-butyllithium in hexane was added dropwise to the mixture. The mixture was stirred for 1 hour while being cooled in the bath. 40 mL of sulfur dioxide gas was introduced into the flask under nitrogen gas. The mixture was stirred for 30 minutes while being cooled in the bath. Then, the bath was removed, and the mixture was warmed to an internal temperature of 0°C.

The precipitated solid was collected by vacuum filtration and washed with 200 mL of tetrahydrofuran. The collected solid was dissolved in 2 L of purified water, then, 260 mL of a 35% hydrogen peroxide solution was added thereto, and the contents were stirred for 18 hours. The filtrate was collected by vacuum filtration, and 600 g of sodium chloride was added thereto. The precipitated white solid was collected by vacuum filtration and purified by being recrystallized from water/isopropyl alcohol. The resulting solid was dried under reduced pressure to afford a hydrophilic monomer represented by formula (M1) below. The yield was 65%.

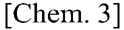

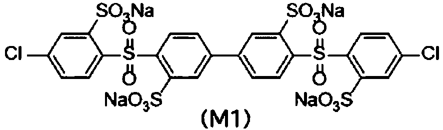

### (Synthesis of Hydrophobic Monomer (M2))

4.0 g of 4,4'-bis[(4-chlorophenyl)sulfonyl]-1,1'-biphenyl, 14.8 g of [1,1'-biphenyl]-4,4'-diol, and 13.2 g of potassium carbonate were added to a 200-mL flask equipped with a stir bar, a Dean-Stark trap, a reflux condenser, and a calcium chloride tube. Thereafter, 50 mL of N,N-dimethylacetamide (DMAc) and 50 mL of toluene were added thereto. The contents were heated to 160°C in an oil bath with stirring, and heating and stirring were continued for 4 hours. The toluene was removed through a Dean-Stark trap, and the mixture was heated to 180°C in an oil bath. After the temperature was raised, heating and stirring were continued for 8 hours. The reaction mixture was allowed to cool to room temperature, and subsequently, the reaction mixture was poured into 200 mL of 10% hydrochloric acid. The precipitated white solid was collected by filtration.

The collected solid was washed with 300 mL of ethanol and dried. The dried solid was purified by being recrystallized from NMP/ethanol. The resulting solid was dried under reduced pressure to afford a hydrophobic monomer (M2) represented by formula (M2) below. The yield was 50%.

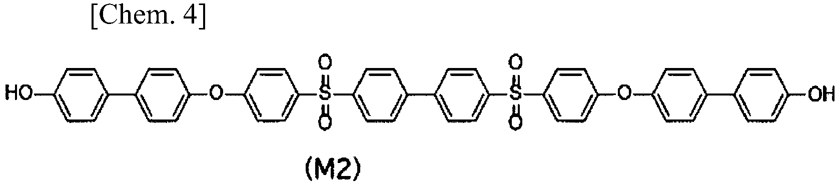

### (Synthesis of Electrolyte Polymer (P1))

0.983 g of the hydrophobic monomer (M2), 1.181 g of the hydrophilic monomer (M1), and 0.507 g of potassium carbonate were added to a 100-mL three-neck flask equipped with a nitrogen inlet tube, a stirrer, and a Dean-Stark trap, and the flask was purged with nitrogen. Subsequently, 10 mL of dimethyl sulfoxide (DMSO) and 10 mL of cyclohexane were added. The contents were heated to 130°C and dehydrated under reflux for 4 hours, and subsequently, the cyclohexane was removed through the Dean-Stark trap. Polymerization was carried out for 150 hours while the temperature was maintained at 130°C. The reaction mixture was allowed to cool to room temperature and, subsequently, purified by reprecipitation in 300 mL of isopropyl alcohol (IPA). The solid was collected by vacuum filtration.

The resulting solid was immersed in 1 M hydrochloric acid for 24 hours to exchange the metal ions (Na⁺ or K⁺) with protons (H⁺). Subsequently, the solid was immersed in purified water to be washed thoroughly and then dried under reduced pressure to afford an electrolyte polymer (P1) (proton-exchanged polymer (P1)), which had the structure represented by formula (P1) below. The yield was 97%.

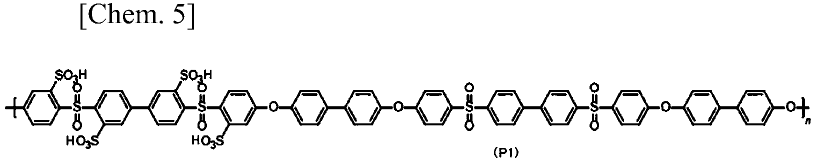

In formula (P1), n represents a positive number. In formula (P1) above, n was approximately 20.

### [Measurement of Molecular Weight]

The number average molecular weight of the electrolyte polymer (P1) was measured by GPC. The sample solution was prepared by dissolving the electrolyte polymer (P1) in an eluent (N,N-dimethylformamide solvent containing 10 mmol/L lithium bromide) at a concentration of 1 mg/mL. The instrument used was an HLC-8320GPC, manufactured by Tosoh Corporation. Two TSKgel SuperAWM-H columns (inside diameter: 6.0 mm, length: 15 cm), manufactured by Tosoh Corporation, were used. The detector used was a differential refractive index detector. The measurement was carried out at a flow rate of 0.6 mL/min and a temperature of 40°C. The number average molecular weight was determined with calibration using standard polyethylene glycol/oxide (PEG/PEO). The number average molecular weight of the electrolyte polymer (P1) was 50000.

### <Preparation of Porous Substrate Retaining Crosslinking Agent>

A crosslinking agent solution having a crosslinking agent concentration of 3.0 × 10⁻⁴ mol/L was prepared by dissolving a crosslinking agent (decafluorobiphenyl with a purity of 98%, manufactured by Tokyo Chemical Industry Co., Ltd.) in isopropyl alcohol.

Three types of porous substrates were prepared as follows. The crosslinking agent solution, obtained as described above, or a diluted solution of the crosslinking agent solution was dropped onto a polyethylene porous substrate (a nonwoven fabric manufactured by Hefei Zhaohui New Material Technology Co., Ltd., trade name: CW12L1, porosity: 72%, and thickness: 14 µm), which was then dried at 60°C for 1 hour. The porous substrates had respective amounts of the crosslinking agent retained of 3.2 × 10⁻⁸ mol/cm², 6.5 × 10⁻⁸ mol/cm², and 14.9 × 10⁻⁸ mol/cm². The amount of the crosslinking agent retained was adjusted by adjusting the concentration and the amount of dropping of the crosslinking agent solution.

### <Preparation of Electrolyte Membrane>

### (Example 1)

A solution containing 10 mass% of the electrolyte polymer (P1) (hereinafter also referred to as an "electrolyte polymer (P1) solution") was prepared by dissolving the electrolyte polymer (P1) in dimethyl sulfoxide (DMSO). This solution was cast-coated onto one surface of the porous substrate having an amount of the crosslinking agent (decafluorobiphenyl) retained of 3.2 × 10⁻⁸ mol/cm², which had a thickness of 20 µm, and the porous substrate was then passed through a gap between glass rods, the gap having a size of 30 µm in a thickness direction. The porous substrate was dried until dry to the touch and then turned over. The solution was cast-coated onto a surface opposite to the surface onto which the solution had been cast-coated. The porous substrate was then passed through a gap between glass rods, the gap having a size of 40 µm in a thickness direction. Subsequently, the porous substrate was heated at 60°C for 6 hours, and, accordingly, an electrolyte membrane of Example 1 was prepared. The electrolyte membrane had a thickness of 40 µm and had a structure with a reinforcement layer held between contact layers. In the present Examples, the thickness of the electrolyte membrane was an average of thicknesses measured with a micrometer at three points in a plane of the electrolyte membrane.

### (Example 2)

An electrolyte membrane of Example 2 was prepared in a manner similar to that of Example 1, except that the porous substrate having an amount of the crosslinking agent retained of 6.5 × 10⁻⁸ mol/cm² was used.

### (Example 3)

An electrolyte membrane of Example 3 was prepared in a manner similar to that of Example 1, except that the porous substrate having an amount of the crosslinking agent retained of 14.9 × 10⁻⁸ mol/cm² was used.

### (Example 4)

An electrolyte membrane of Example 4 was prepared in a manner similar to that of Example 1, except that, before the electrolyte polymer (P1) solution was cast-coated onto the porous substrate, an aqueous potassium carbonate solution with a pH of 9.5 was coated onto the porous substrate at a rate of 0.1 mL/cm² and that the porous substrate was dried by heating at 60°C for 3 hours.

### (Comparative Example 1)

An electrolyte membrane of Comparative Example 1 was prepared in a manner similar to that of Example 1, except that a porous substrate (polyethylene porous substrate) retaining no crosslinking agent was used.

### (Number Average Molecular Weight of Electrolyte Polymer in Reinforcement Layer)

The number average molecular weight (Mn) of the electrolyte polymer in the reinforcement layer of the electrolyte membrane of each of the Examples was measured by GPC. The electrolyte polymer in the reinforcement layer was obtained by cutting a portion of the reinforcement layer of the electrolyte membrane of each of the Examples and dissolving the portion in N,N-dimethylformamide solvent. The number average molecular weight of the prepared electrolyte polymers was measured in a manner similar to that described above in "[Measurement of Molecular Weight]". The electrolyte polymers in the reinforcement layers of the electrolyte membranes of Examples 1 to 4 had a number average molecular weight of 62000, 78000, 90000, and 72000, respectively. Accordingly, it was confirmed that in the reinforcement layer of the electrolyte membrane of each of the Examples, at least a portion of the electrolyte polymer (P1) was crosslinked to form a crosslinked electrolyte polymer.

### <Evaluation>

### (Swelling Ratio)

A 4 cm × 2 cm rectangular piece was cut from each of the electrolyte membranes with a die cutting machine, and a size of the piece of the electrolyte membrane was measured. The cut piece of the electrolyte membrane was sandwiched between microscope slides having a thickness of 2 mm and was immersed in 100 mL of purified water at room temperature for 1 hour. Subsequently, the electrolyte membrane was removed, and droplets on the surface were removed. The size was measured, and, for each of the machine direction and the transverse direction, a swelling ratio of the electrolyte membrane in the MD direction or the TD direction was calculated according to equation (1) below. $Swelling ratio \left[%\right] = \left(L2-L1\right) / L 1 \times 100$ equation (1)

In equation (1), L1 is the length of the side of the membrane before swelling, and L2 is the length of the side of the membrane after swelling.

### (Tensile Strength)

A test specimen was cut from each of the electrolyte membranes (5 cm × 1 cm) before swelling, in accordance with JIS K6251, and a tensile test was conducted.

The measurement conditions were as follows. The tensile strain was determined from the parallel length of the test specimen and the crosshead displacement. The tensile strength was determined from the obtained stress-strain curve.
Name of instrument: Instron 5848 MicroTester
Crosshead speed: 1 mm/min
Shape of test specimen: JIS K 6251 No. 8 test specimen (40% reduced size)
Laboratory environment: temperature of 23 ± 2°C, humidity of 50 ± 5% RH
Parallel length: 6.4 mm
Grip separation: 8 mm

**[Table 1]**

| | Amount of Crosslinking Agent retained [x10⁻⁸mol/cm²] | Number Average Molecular Weight of Electrolyte Polymer | Swelling Ratio [%] | | Tensile Strength (relative value) |
|---|---|---|---|---|---|
| | | | MD | TD | MD |
| Example 1 | 3.2 | 62000 | 9.2 | 11.2 | 1.07 |
| Example 2 | 6.5 | 78000 | 6.1 | 10.6 | 1.11 |
| Example 3 | 14.9 | 90000 | 4.2 | 9.3 | 1.18 |
| Example 4 | 3.2 | 72000 | 6.1 | 10.3 | 1.07 |
| Comparative Example 1 | - | 50000 | 9.6 | 11.8 | 1.00 (reference) |

The results shown above confirmed that even a very rigid electrolyte polymer obtained by crosslinking a rigid electrolyte polymer having a biphenyl skeleton in its backbone was able to be loaded into fine pores.

All of the electrolyte membranes of the Examples, in each of which the electrolyte polymer in the reinforcement layer had a crosslinked structure, had a lower swelling ratio and an improved tensile strength, compared to the electrolyte membrane of Comparative Example 1. This confirmed that the electrolyte membranes of the Examples had high mechanical strength and excellent swelling resistance.

A comparison between Example 1 and Example 2 confirmed that when the number average molecular weight of the electrolyte polymer in the reinforcement layer was equal to or greater than 78000 (the apparent molecular weight was 1.56 times that before crosslinking), the swelling ratio was more notably improved.

The entire contents of the specification, claims, drawings and abstract of Japanese Patent Application No. 2024-36172, filed on March 8, 2024, are cited and incorporated herein as a disclosure of the specification of the present disclosure.

### Reference Signs List

1... porous membrane, 2... pores, 3... crosslinked electrolyte polymer, 4... reinforcement layer, 5... contact layer, 10... electrolyte membrane

## Claims

1. A method for producing an electrolyte membrane comprising:
a step of providing a porous substrate comprising a porous membrane and a crosslinking agent retained in pores of the porous membrane;
an impregnation step of impregnating the porous substrate with a solution comprising an electrolyte polymer; and
a crosslinking step of reacting the electrolyte polymer with the crosslinking agent to form a crosslinked electrolyte polymer.

2. The method for producing the electrolyte membrane according to claim 1, further comprising:
a drying step of drying the solution loaded into the porous substrate in the impregnation step;
a step of coating the solution comprising the electrolyte polymer onto a surface of the porous substrate subjected to the drying step to form a layer made from the solution on the surface of the porous substrate; and
a step of forming a contact layer comprising the electrolyte polymer by drying the layer made from the solution.

3. The method for producing the electrolyte membrane according to claim 2, wherein the contact layer has a thickness of 1 µm or greater and 15 µm or less.

4. The method for producing the electrolyte membrane according to any one of claims 1 to 3, wherein the electrolyte polymer has a number average molecular weight of 18000 or greater and 60000 or less.

5. The method for producing the electrolyte membrane according to any one of claims 1 to 4, wherein an amount of the crosslinking agent retained in the porous substrate is 3.0 × 10⁻⁸ mol/cm² or greater and 20.0 × 10⁻⁸ mol/cm² or less.

6. The method for producing the electrolyte membrane according to any one of claims 1 to 5, wherein the porous substrate further comprises, in the pores, a binding agent that is not reactive with the crosslinking agent.

7. The method for producing the electrolyte membrane according to claim 6, wherein the binding agent is a polymer having a molecular structure identical to a molecular structure of a backbone of the electrolyte polymer.

8. An electrolyte membrane comprising a structure in which a reinforcement layer is disposed between contact layers, wherein
the reinforcement layer comprises a porous membrane and a crosslinked electrolyte polymer that is present in pores of the porous membrane and is at least partially crosslinked, and
the contact layers comprise an uncrosslinked electrolyte polymer.

9. The electrolyte membrane according to claim 8, wherein
the crosslinked electrolyte polymer is a reaction product of an electrolyte polymer and a crosslinking agent, and
moieties derived from the crosslinking agent in the crosslinked electrolyte polymer are present in a higher amount in a vicinity of a wall surface within the pores than in a central region within the pores in the porous membrane.

10. The electrolyte membrane according to claim 8 or 9, wherein the crosslinked electrolyte polymer has a number average molecular weight of 50000 or greater and 300000 or less.

11. The electrolyte membrane according to any one of claims 8 to 10, wherein the uncrosslinked electrolyte polymer has a number average molecular weight of 18000 or greater and 60000 or less.

12. The electrolyte membrane according to any one of claims 8 to 11, wherein the contact layers have a thickness of 1 µm or greater and 15 µm or less.

13. The electrolyte membrane according to any one of claims 8 to 12, wherein the reinforcement layer comprises, in the pores of the porous membrane, a binding agent that is not reactive with the crosslinking agent.

14. The electrolyte membrane according to claim 13, wherein the binding agent is a polymer having a molecular structure identical to a molecular structure of a backbone of the electrolyte polymer.

15. The electrolyte membrane according to any one of claims 8 to 14, wherein the electrolyte membrane is an electrolyte membrane for fuel cells or an electrolyte membrane for water electrolysis.
